# EUROPÄISCHE PATENTANMELDUNG

(11) **EP 2 769 963 A1**
(43) Veröffentlichungstag der Anmeldung: **27.08.2014**
(21) Anmeldenummer: 14169502.3
(22) Anmeldetag: 26.10.2010
(51) Int. Cl.: C04B 24/16, C04B 24/26, C04B 28/14, C04B 28/16

(54) **Dispergiermittel**

(30) Priorität: 25.11.2009 EP 09177093
(62) Teilanmeldung aus: 10773041.8
(71) Anmelder: BASF Construction Solutions GmbH, 83308 Trostberg (DE)
(72) Erfinder: Prosiegel, Klaus, 83308 Trostberg (DE); Goldbrunner, Johann, 84518 Garching (DE)

(57) **Zusammenfassung**

Als Fließmittel für Kalziumsulfat-haltige Baustoffmischungen in Form von Spachtelmassen werden dispergierend wirkende Zusammensetzungen vorgeschlagen, die ein Copolymer in Form eines Polycarboxylatethers enthalten, wobei das Copolymer frei von Dicarbonsäuren als Comonomer-Komponente ist. Dispergiermittel können in einer Menge von 0,002 bis 1,0 Gew.-% eingesetzt werden und verleihen auf diese Weise den Endprodukten eine deutlich verbesserte Frühfestigkeit, wobei größere Schichtdicken erzielt werden können.

## Beschreibung

Gegenstand der vorliegenden Erfindung ist die Verwendung einer dispergierend wirkenden Zusammensetzung auf Basis eines Polycarboxylatethers als Fließmittel für Kalziumsulfat-haltige Baustoffmischungen in Form von Spachtelmassen.

Die Verwendung von Copolymeren auf Basis eines Polycarboxylatethers als Fließmittel für bauchemische Massen, d. h., hydraulisch abbindende und aushärtende Zusammensetzungen, ist hinlänglich bekannt. Derartige Copolymere bestehen im Wesentlichen aus einem olefinisch ungesättigten Monocarbonsäure-Comonomer und einem Ester oder einem Salz davon und/oder einem olefinisch ungesättigten Sulfonsäure-Comonomer auf der einen Seite, und einem Comonomer mit Etherfunktion auf der anderen Seite. Näher beschrieben sind derartige Copolymere bspw. in EP 0 537 870 A1, EP 0 736 553 B1, EP 1 138 698 A1, EP 1 189 955 B1 und EP 1 902 085 B1.

Die Verwendung derartiger Copolymere als Fließmittel ist nicht nur für zementäre Systeme, sondern vor allem auch für Kalziumsulfat-basierende Systeme interessant.

Sowohl Kalziumsulfat, als auch Zemente, sind durch Hydratation aushärtende Bindemittel. Der bekannteste Vertreter der Kalziumsulfat-basierten Systeme ist Gips, der auch als Kalziumsulfatdihydrat, Terra Alba oder Plaster of Paris bezeichnet wird. Letzterer ist auch als kalzinierter Gips, Kalziumsulfathalbhydrat, Kalziumsulfatsemihydrat oder Kalziumsulfathemihydrat bekannt. In dieser Form sind annähernd 0,5 Moleküle Wasser mit einem Molekül Kalziumsulfat assozüert. Um zur Hemihydratform zu gelangen, wird Gips kalziniert und so ca. ¾ des Hydrationswassers ausgetrieben.

Kalziumsulfathemihydrat kann je nach Herstellungsverfahrenmindestens zwei Kristallformen, nämlich α-kalzinierten Gips und/oder β-kalzinierten Gips ausbilden.

Durch die Zugabe der Hemihydratform zu Wasser reagiert das Hemihydrat mit ausreichenden Wassermengen und wird dabei in ineinander greifende Dihydratkristalle umgewandelt, wodurch die Slurry aushärtet.

Werden Gips-haltige Zusammensetzungen in Formen gegossen, um so bspw. vorgefertigte Bauteile zu erhalten, oder aber bei der Herstellung von so genannten Gipskartonplatten, also Bauwerkstoffprodukten, bei denen eine plattenförmige, ausgehärtete Gipsschicht beidseitig durch Papierlagen begrenzt ist und die bspw. für den Trockenausbau von Innenräumen oder aber auch zur Herstellung von Wärmedämmverbundsystemen eingesetzt werden, verwendet, ist es wünschenswert, wenn die erhaltenen räumlichen Produkte formbeständig sind, weshalb das verwendete Anmachwasser in der Slurry durch höhere Temperaturen innerhalb kürzester Zeit ausgetrieben werden muss. Dabei kommt es zu einer kurzfristigen, aber starken Hitzeeinwirkung auf die Grünkörper, wodurch häufig Risse und Abplatzungen auftreten. Man ist deshalb nicht nur unter energetischen Gesichtspunkten bestrebt, das Anmachwasser möglichst zu reduzieren, wobei dann allerdings wieder das Problem der unzureichenden Fließfähigkeit der nicht ausgehärteten Rohmasse auftritt.

Man hat deshalb, wie bereits angedeutet, versucht, der Slurry Dispergiermittel beizumischen, die auch als Fließmittel bezeichnet werden. Diese polymeren Fließmittel belegen die Oberflächen der Bindemittel-Komponenten und bewirken so eine höhere Fließfähigkeit der Partikel in der feuchten Zusammensetzung, wodurch beträchtliche Mengen an Anmachwasser eingespart werden können.

Die Reduzierung der Wassermenge hat aber auch den Effekt, dass die erhaltenen ausgehärteten Produkte eine erhöhte Festigkeit und Dichte aufweisen. Ein weiterer Vorteil besteht darin, sich durch die Zugabe von Copolymeren auf Basis von Polycarboxylaten zur bevorzugten und weit günstigeren β-Form den Wasser-Gips-Werten der teuren α-Form anzunähern.

In dem US-Patent 7,338,990 B2 ist eine Mischung beschrieben, die Zement und kalzinierten Gips enthält und darüber hinaus ein Polycarboxylatdispergiermittel. Beim Dispergiermittel handelt es sich um ein Copolymer auf Basis eines Oxyalkylenglykolalkylethers und ungesättigten Dicarbonsäurederivaten. Diese Mischung wird eingesetzt, um Produkte für den Außenbereich herzustellen. Als nachteilig hat sich allerdings deren geringe Festigkeit und insbesondere Frühfestigkeit herausgestellt. Dieser Effekt ist vergleichbar mit dem bekannter Verzögerer vom Typ der Fruchtsäuren, wie sie z. B. Weinsäure und Zitronensäure darstellen.

Aus US 7,056,964 B2 ist ebenfalls eine Mischung beschrieben, die mit einer definierten Menge Anmachwasser zu einer Slurry verarbeitet werden kann, welche als Fließestrich ("Flooring") mit einer hohen Festigkeit verwendet werden kann. Die Mischung besteht aus einem Kalziumsulfathemihydrat, bei dem mindestens 25% in der β-Form vorliegen müssen, und einem Polycarboxylatfließmittel. Beim Fließmittel handelt es sich um ein Copolymer eines Oxyalkylenalkylethers und einer ungesättigten Dicarbonsäure.

Bei sämtlichen Verlaufsmassen, die auf polymere Fließmittel zurückgreifen, handelt es sich bei den Fließmitteln um Copolymere aus drei Monomeruntereinheiten. Die bekanntesten Bausteine dabei sind Acrylsäure und Acrylamid, Maleinsäure und das so genannte "VOBPEG" (Vinyl-oxybutyl-polyethylen-glykolether).

Aus den Nachteilen des Standes der Technik, nämlich der deutlichen Verzögerung des Erhärtungs- und Aushärtungsverhaltens aufgrund der Dicarbonsäureanteile als Comonomer, hat sich für die vorliegende Erfindung die Aufgabe gestellt, alternative Fließmittel bereitzustellen, die diesen Nachteil nicht aufweisen und die insbesondere unter wirtschaftlichen Gesichtspunkten eine brauchbare Alternative im Bereich der Spachtelmassen darstellt.

Gelöst wurde diese Aufgabe durch die Verwendung einer dispergierend wirkenden Zusammensetzung, enthaltend ein Copolymer in Form eines Polycarboxylatethers, bestehend aus
1) mindestens einem olefinisch ungesättigten Monocarbonsäure-Comonomer oder einem Ester oder ein Salz davon,
   und
2) mindestens einem Comonomer der allg. Formel (I) 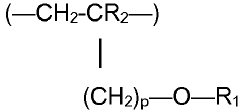
   worin R₁ für 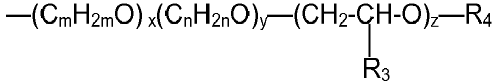 steht und R₂ für H oder einen aliphatischen Kohlenwasserstoffrest mit 1 bis 5 C-Atomen; R₃ = unsubstituierter oder substituierter Arylrest und bevorzugt Phenyl, und R₄ = H oder ein aliphatischer Kohlenwasserstoffrest mit 1 bis 20 C-Atomen, ein cycloaliphatischer Kohlenwasserstoffrest mit 5 bis 8 C-Atomen, ein substituierter Arylrest mit 6 bis 14 C-Atomen oder ein Vertreter der Reihe 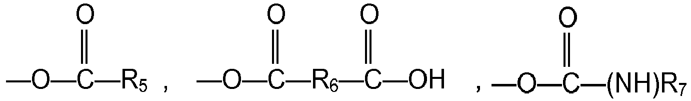
   wobei R₅ und R₇ jeweils für einen Alkyl-, Aryl-, Aralkyl-, oder Alkaryl-Rest und R₆ für einen Alkyliden-, Aryliden-, Aralkyliden- oder Alkaryliden-Rest stehen,
      und
   p = 0, 1, 2, 3 oder 4
   m, n bedeuten unabhängig voneinander 2, 3, 4 oder 5,
   x und y bedeuten unabhängig voneinander eine ganze Zahl ≤350 und z = 0 bis 200,
   wobei im Copolymer die Comonomer-Einheiten innermolekulare Unterschiede hinsichtlich der Reste R₁ und/oder R₂ und/oder R₃ und/oder R₄ und/oder R₅ und/oder R₆ und/oder R₇ und/oder m und/oder n und/oder x und/oder y und/oder z aufweisen und wobei sich die angesprochenen Unterschiede insbesondere auf die Zusammensetzung und Länge der Seitenketten beziehen,
als Fliessmittel für Calciumsulfat-haltige Baustoff-Mischungen in Form von Spachtelmassen.

Überraschend hat sich herausgestellt, dass damit nicht nur die Aufgabenstellung voll erfüllt werden konnte, indem die so zugänglichen Spachtelmassen tatsächlich eine bessere Frühfestigkeit aufweisen, womit der verzögernde Effekt fast vollständig vermieden werden kann. Bei den strukturellen Untersuchungen hat sich zudem herausgestellt, dass der Kristallhabitus der hydraulischen Bindemittelanteile nicht verändert wurde. Außerdem konnte eine verbesserte Verarbeitbarkeit und eine anhaltende Langzeitstabilität der ausgehärteten Produkte beobachtet werden. Schließlich können die verwendeten Dispergiermittel erstaunlicherweise in einer deutlich geringeren Dosierung im Vergleich zu den bisherigen Fließmitteln im Spachtelmassenbereich eingesetzt werden, ohne dass dabei die Herstellbedingungen und die Eigenschaften der Produkte negativ beeinträchtigt werden.

Die genannten Copolymere mit nur zwei Comonomer-Einheiten sind aus der bereits genannten EP 1 902 085 B1 bekannt, dort allerdings nicht im Zusammenhang mit Spachtelmassen, sondern ausschließlich im Zusammenhang mit Gips-Systemen.

Nicht zuletzt aufgrund des letztgenannten überraschenden Vorteils, sieht die vorliegende Erfindung in einer bevorzugten Ausführungsform vor, die Fließmittel auf Basis von nur 2 Monomereinheiten in einer Menge von 0,002 bis 1,0 Gew.-%, und vorzugsweise 0,01 bis 0,3 Wirksubstanz, jeweils bezogen auf die Gesamtzusammensetzung der Baustoffmischung, einzusetzen. Besonders bevorzugt sind Mengen von 0,01 bis 0,1 Gew.-% Wirksubstanz für Systeme auf Basis von α-Halbhydrat-Form und Mengen von 0,05 bis 0,3 Gew.-% Wirksubstanz für Systeme auf Basis von β-Halbhydrat-Form.

Besonders vorteilhafte Ergebnisse lassen sich mit Spachtelmassen erzielen, die erfindungsgemäß 15 bis 98 Gew.-%, bevorzugt 15 bis 75 Gew.-% und insbesondere 25 bis 40 Gew.-%, jeweils bezogen auf die Gesamtzusammensetzung der Baustoffmischung, an Kalziumsulfat-basierten Bindemittel und insbesondere Kalziumsulfathemihydrat und/oder Anhydrit enthalten.

Die Erfindung sieht ebenso vor, dass die jeweiligen Baustoffmischungen neben den genannten Gipsanteilen auch Zemente als hydraulische Bindemittel enthalten. In diesem Zusammenhang empfiehlt es sich, der Fließestrichzusammensetzung oder aber der Spachtelmasse ≤ 5 Gew.-% und vorzugsweise zwischen 2,0 und 5,0 Gew.-%, wieder jeweils bezogen auf die Gesamtzusammensetzung der Baustoffmischung eines Zementes zuzusetzen. Geeignet sind vorzugsweise Zemente wie Portlandzement vom Typ CEM I, CEM II, CEM III, CEM IV und/oder CEM V; in Frage kommen aber auch Weißzemente, Aluminatzemente oder Mischungen aus den genannten Zementformen.

In den meisten Anwendungsfällen kann es von Vorteil sein, dass das Polycarboxylatfließmittel in trockener Form, vorzugsweise in Pulverform und besonders bevorzugt in konglomeratfreier Form einzusetzen. Da das Dispergiermittel überwiegend gleichzeitig mit dem Anmachwasser verarbeitet wird, sollte es vorzugsweise in wasserlöslicher Form verwendet werden, was die vorliegende Erfindung ebenfalls vorsieht.

Hinsichtlich des Polycarboxylatdispergiermittels ergeben sich abgesehen von der zwingenden Beschränkung auf die beiden genannten erfindungswesentlichen Monomereinheiten, prinzipiell keine Einschränkungen. Empfohlen wird lediglich ein Molekulargewicht, welches zwischen 5.000 und 100.000 Dalton liegt. Besonders bevorzugt sind Molekulargewichte zwischen 10.000 und 80.000 und noch mehr bevorzugt zwischen 20.000 und 50.000 Dalton.

Die vorliegende Erfindung sieht ferner vor, dass das Copolymer die Comonomer-Komponente 1 in Anteilen von 30 bis 99 Mol-% und die Comonomer-Komponente 2 in Anteilen von 70 bis 1 Mol-% enthält. Bevorzugte Anteile hinsichtlich der Comonomer-Komponente 1 sind 40 bis 90 Mol-% und bezüglich der Comonomer-Komponente 2 60 bis 10 Mol-%.

Im vorliegenden Fall der Erfindung sollte die Comonomer-Komponente 1 für eine Acrylsäure oder ein Salz davon stehen, und die Comonomer-Komponente 2 mit p = 0 oder 1, sollte eine Vinyl- oder Allylgruppe und als R₁ einen Polyether enthalten. Neben der Acrylsäure kommen als Comonomer-Komponente 1 aber auch Methacrylsäure, Crotonsäure, Isocrotonsäure, Allylsulfonsäure, Vinylsulfonsäure und deren geeignete Salze, sowie deren Alkyl- oder Hydroxyalkylester in Frage, wobei die Alkylreste 1 bis 10 C-Atome aufweisen sollten.

Vorgesehen ist auch, dass das Copolymer neben den beiden Comonomer-Komponenten 1 und 2 zusätzliche Baugruppen in copolymerisierter Form aufweist. In diesem Zusammenhang sind allerdings Dicarbonsäuren ausgeschlossen. Bei den zusätzlichen Baugruppen kann es sich um Sterole, Acrylamide, olefinisch ungesättigte Sulfonsäure-Comonomere oder einem Salz davon und/oder um hydrophobe Verbindungen handeln, wobei Esterstruktureinheiten, Polypropylenoxid und Polypropylenoxid/Polyethylenoxid-Einheiten als besonders bevorzugt anzusehen sind.

Sollte das Copolymer die zusätzlichen Baugruppen enthalten, so sollten diese in Anteilen bis 5 Mol-%, bevorzugt von 0,05 bis 3,0 Mol-% und insbesondere von 0,1 bis 1,0 Mol-% enthalten sein.

Hinsichtlich der Formel (I) sieht die vorliegende Erfindung in einer bevorzugten Ausführung vor, dass es sich dabei um einen Allyl- oder Vinylgruppen-haltigen Polyether handelt.

Selbstverständlich kann das erfindungswesentliche Fließmittel im Zusammenhang mit dessen Anwendung in Spachtelmassen auch in Kombination mit anderen Dispergiermitteln eingesetzt werden. Diese können dann als Comonomere durchaus ungesättigte Dicarbonsäuren und/oder Dicarbonsäurederivate enthalten. Durch diese Maßnahme kann die Performance der eingesetzten Fließmittel dem jeweiligen Anwendungszweck zusätzlich angepasst werden, aber auch die jeweiligen Herstellungsverfahren optimiert werden.

Aufgrund der vorteilhaften Eigenschaften des beschriebenen Copolymers umfasst die vorliegende Erfindung Anwendungsvarianten, bei denen es sich um die Herstellung von Spachtelmassen mit einer bevorzugten Schichtdicke bis 20 mm handelt. Die Spachtelmassen sollten vorzugsweise auf Basis von Kaliumsulfathalbhydrat sein.

Zusammenfassend ist festzustellen, dass die bekannten Fließmittel auf Basis von Polycarboxylatethern durch den Verzicht auf Dicarbonsäuren als Comonomer-Einheit in Form von Copolymeren auf Basis von nur noch 2 Comonomer-Einheiten neuen Verwendungsgebieten zugeführt werden können, was insbesondere unter wirtschaftlichen Gesichtspunkten vorteilhaft ist, da die Dosierung deutlich reduziert werden kann und zudem Frühfestigkeitswerte erreicht werden, die zu verbesserten Produktqualitäten führen.

Die nachfolgenden Beispiele verdeutlichen die vorliegende Erfindung.
- Vergleich von Melfux 1641 F und Melflux 2651 F in einer Richtrezeptur für Spachtelmassen
1) Feststoffe trocken mischen
2) Wasser zugeben
3) 1 min. mit Küchenquirl
4) Vicat-Fließmaß bestimmen (Soll 24-25,5cm)

| | ERFINDUNG | Vergleich 1 | Vergleich 2 |
|---|---|---|---|
| | Melflux 5581 F | Melflux 1641F | Melflux 2651F |
| Halbhydrat (alpha-Form aus REA-Gips) | 400,00g | 400,00g | 400,00g |
| Quarzsand (H33 von Quarzwerke Haltern) | 400,00g | 400,00g | 400,00g |
| Kalksteinmehl (Omyacarb BG 20) | 173,20g | 172,57g | 173,09g |
| Verzögerer (Retardan P) | 0,035g | 0,035g | 0,035g |
| Stabilisierer (Starvis 4500F) | 0,60g | 0,60g | 0,60g |
| Fließmittel (gemäß Angabe) | 0,17g | 0,80g | 0,28g |
| Dispersionspulver (Vinnapas 5011 L) | 25,00g | 25,00g | 25,00g |
| Entschäumer (Agitan P840) | 1,00g | 1,00g | 1,00g |
| Wasser | 200g | 200g | 200g |
| Fließmaß (2 min.) [cm] | 25,4 | 24,0 | 25,4 |
| AB (Vicat 300g): [h:min] | 01:26 | 03:54 | 03:58 |
| AE (Vicat 300g): [h:min] | 01:30 | 03:59 | 04:16 |

| | | | |
|---|---|---|---|
| Melflux^{®} ist eine eingetragene Marke der BASF Construction Polymers GmbH | | | |

## Patentansprüche

1. Verwendung einer dispergierend wirkenden Zusammensetzung, enthaltend ein Copolymer in Form eines Polycarboxylatethers, bestehend aus
1) mindestens einem olefinisch ungesättigten Monocarbonsäure-Comonomer oder einem Ester oder ein Salz davon
und
2) mindestens einem Comonomer der allg. Formel (I) 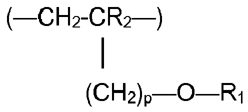
worin R₁ für 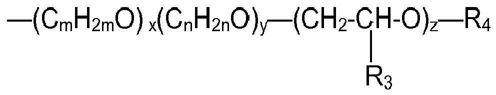 steht und R₂ für H oder einen aliphatischen Kohlenwasserstoffrest mit 1 bis 5 C-Atomen; R₃ = unsubstituierter oder substituierter Arylrest und bevorzugt Phenyl, und R₄ = H oder ein aliphatischer Kohlenwasserstoffrest mit 1 bis 20 C-Atomen, ein cycloaliphatischer Kohlenwasserstoffrest mit 5 bis 8 C-Atomen, ein substituierter Arylrest mit 6 bis 14 C-Atomen oder ein Vertreter der Reihe 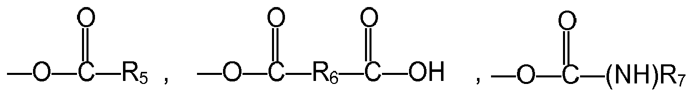
wobei R₅ und R₇ jeweils für einen Alkyl-, Aryl-, Aralkyl-, oder Alkaryl-Rest und R₆ für einen Alkyliden-, Aryliden-, Aralkyliden- oder Alkaryliden-Rest stehen, und
p = 0, 1, 2, 3 oder 4
m, n bedeuten unabhängig voneinander 2, 3, 4 oder 5,
x und y bedeuten unabhängig voneinander eine ganze Zahl ≤350 und
z = 0 bis 200,
wobei im Copolymer die Comonomer-Einheiten Unterschiede aufweisen,
als Fliessmittel für Calciumsulfat-haltige Baustoff-Mischungen in Form von Spachtelmassen.

2. Verwendung nach Anspruch 1, **dadurch gekennzeichnet, dass** das Dispergiermittel in einer Menge von 0,002 bis 1,0 Gew.-%, bezogen auf die Gesamtzusammensetzung der Baustoff-Mischung, eingesetzt wird.

3. Verwendung nach einem der Ansprüche 1 oder 2, **dadurch gekennzeichnet, dass** der Fliessestrich 15 bis 98 Gew.-%, bevorzugt 15 bis 75 Gew.% und insbesondere 25 bis 40 Gew.-%, jeweils bezogen auf die Gesamtzusammensetzung der Baustoff-Mischung, an Calciumsulfat-basiertem Bindemittel, insbesondere Calciumsulfathemihydrat und/oder Anhydrit enthält.

4. Verwendung nach einem der Ansprüche 1 bis 3, **dadurch gekennzeichnet, dass** die Fliessestrichzusammensetzung ≤ 50 Gew.-%, vorzugsweise zwischen 2,0 und 30 Gew.-% und besonders bevorzugt ≤ 5 Gew.-%, jeweils bezogen auf die Gesamtzusammensetzung der Baustoff-Mischung, eines Zements enthält.

5. Verwendung nach einem der Ansprüche 1 bis 4, **dadurch gekennzeichnet, dass** es sich bei den Zementen um Portlandzement vom Typ CEM I, CEM II, CEM III, CEM IV und/oder CEM V, um Weisszement, Aluminatzement, insbesondere Sulfatbeständige Zemente oder Mischungen daraus handelt.

6. Verwendung nach einem der Ansprüche 1 bis 5, **dadurch gekennzeichnet, dass** das Polycarboxylatfliessmittel in trockener Form, vorzugsweise in Pulverform und besonders bevorzugt in konglomerat-freier Form, eingesetzt wird.

7. Verwendung nach einem der Ansprüche 1 bis 6, **dadurch gekennzeichnet, dass** das Dispergiermittel in wasserlöslicher Form verwendet wird.

8. Verwendung nach einem der Ansprüche 1 bis 7, **dadurch gekennzeichnet, dass** ein Polycarboxylat-Dispergiermittel eingesetzt wird, welches ein Molekulargewicht zwischen 5000 und 100 000 Dalton aufweist.

9. Verwendung nach einem der Ansprüche 1 bis 8, **dadurch gekennzeichnet, dass** das Copolymer die Comonomer-Komponente 1) in Anteilen von 30 bis 99 Mol-% und die Comonomer-Komponente 2) in Anteilen von 70 bis 1 Mol-% enthält.

10. Verwendung nach einem der Ansprüche 1 bis 9, **dadurch gekennzeichnet, dass** das Copolymer die Comonomer-Komponente 1) in Anteilen von 40 bis 90 Mol-% und die Comonomer-Komponente 2) in Anteilen von 60 bis 10 Mol-% enthält.

11. Verwendung nach einem der Ansprüche 1 bis 10, **dadurch gekennzeichnet, dass** die Comonomer-Komponente 1) für eine Acrylsäure oder ein Salz davon steht, und die Comonomer-Komponente 2) mit p = 0 oder 1 eine Vinyl- oder Allylgruppe und als R₁ einen Polyether enthält.

12. Verwendung nach einem der Ansprüche 1 bis 11, **dadurch gekennzeichnet, dass** die Comonomer-Komponente 1) aus der Reihe Acrylsäure, Methacrylsäure, Crotonsäure, Isocrotonsäure, Allylsulfonsäure, Vinylsulfonsäure und deren geeignete Salze sowie deren Alkyl- oder Hydroxyalkylester, stammt.

13. Verwendung nach einem der Ansprüche 1 bis 13, **dadurch gekennzeichnet, dass** das Copolymer zusätzliche Baugruppen in copolymerisierter Form aufweist.

14. Verwendung nach Anspruch 13, **dadurch gekennzeichnet, dass** es sich bei den zusätzlichen Baugruppen um Styrole, Acrylamide und/oder um hydrophobe Verbindungen handelt, wobei Esterstruktureinheiten, Polypropylenoxid- und Polypropylenoxid/Polyethylenoxid-Einheiten besonders bevorzugt sind.

15. Verwendung nach einem der Ansprüche 13 oder 14, **dadurch gekennzeichnet, dass** das Copolymer die zusätzliche Baugruppe in Anteilen bis 5 Mol-%, bevorzugt von 0,05 bis 3,0 Mol-% und insbesondere von 0,1 bis 1,0 Mol-% enthält.

16. Verwendung nach einem der Ansprüche 1 bis 15, **dadurch gekennzeichnet, dass** die Formel (I) für einen Allyl- oder Vinylgruppen-haltigen Polyether steht.

17. Verwendung nach einem der Ansprüche 1 bis 16, **dadurch gekennzeichnet, dass** das Fliessmittel in Kombination mit anderen Dispergiermitteln eingesetzt wird und insbesondere in Kombination mit Copolymeren, die als Comonomere ungesättigte Dicarbonsäuren und/oder Dicarbonsäure-Derivate enthalten.

18. Verwendung nach einem der Ansprüche 1 bis 17 zur Herstellung von Spachtelmassen auf Basis eines Calciumsulfat-basierten Bindemittels, besonders bevorzugt von Anhydrit und/oder Calciumsulfathemihydrat.
